# EUROPÄISCHE PATENTSCHRIFT

(11) **EP 3 887 213 B1**
(45) Veröffentlichungstag und Bekanntmachung des Hinweises auf die Patenterteilung: **10.01.2024**
(21) Anmeldenummer: 19828569.4
(22) Anmeldetag: 28.11.2019
(51) Int. Cl.: B60R 21/213, B60R 21/237

(54) **AIRBAGMODUL UND VERFAHREN ZU SEINER HERSTELLUNG**
AIRBAG MODULE AND METHOD FOR THE PRODUCTION THEREOF
MODULE DE COUSSIN GONFLABLE DE SÉCURITÉ, ET PROCÉDÉ DE FABRICATION ASSOCIÉ

(30) Priorität: 29.11.2018 DE 102018009358
(43) Veröffentlichungstag der Anmeldung: 06.10.2021
(73) Patentinhaber: Dalphi Metal España, S.A., 36213 Vigo (ES)
(72) Erfinder: SANTÍN NAVARRO, Pedro, José, 36204 Vigo (ES); SOBRADELO SINEIRO, Miguel, 36206 Vigo (ES)
(74) Vertreter: ZF Patentabteilung - DIPS
(86) Internationale Anmeldenummer: PCT/EP2019/082900
(87) Internationale Veröffentlichungsnummer: WO 2020/109463

(56) Entgegenhaltungen:
- DE-T5-112004 000 671
- KR-A- 20140 084 977
- US-A1- 2007 075 530
- US-A1- 2018 208 146

## Beschreibung

Die Erfindung betrifft ein Airbagmodul nach dem Oberbegriff von Anspruch 1. Daneben betrifft die Erfindung ein Verfahren zur Herstellung eines Airbagmoduls.

Zur Verbesserung des Insassenschutzes sowie des Schutzes von Passanten werden in vielen Fahrzeugen, insbesondere in landgebundenen Kraftfahrzeugen, Rückhalteeinrichtungen mit aufblasbaren Gassäcken eingesetzt. Solche Airbagmodule werden für einzelne Insassen oder für mehrere Insassen zur Abmilderung von Kräften konfiguriert, die meist von außen auf das Kraftfahrzeug einwirken bzw. einwirken zu drohen. Je nach Einwirkungsrichtung unterscheidet man zwischen Frontalaufprallschutzeinrichtungen (z.B. Fahrerairbagmodul, Beifahrerairbagmodul, Knieairbagmodul), Seitenaufprallschutzeinrichtungen (z.B. Thoraxairbagmodul, Curtainairbagmodul) und Heckaufprallschutzeinrichtungen. Daneben finden auch weitere Airbagmodule im Fahrzeuginnenraum (z.B. Interaktionsairbagmodul, Rücksitzinsassenmodul, aufblasbarer Gurt) sowie außerhalb des Fahrzeuginnenraums angeordnete, aufblasbare Aufprallschutzeinrichtungen Anwendung. Die Erfindung betrifft all diese Airbagmodule. In der WO 2004/0941198 A1 ist beispielsweise beschrieben, einen Gassack, der für ein Curtainairbagmodul bestimmt ist, zunächst soweit einzurollen, dass nur noch die Befestigungslaschen herausragen, und sodann die Rolle mittels eines Rundstabes oder einer Platte parallel zur Richtung der Befestigungslaschen einzustülpen, um eine nach oben offene, C-förmige Form zu erhalten, die dann mittels einer Umhüllung fixiert wird.

Ein Curtainairbagmodul mit einem derart vorbereiteten Gassack ist jedoch für manche Fahrzeuge weniger geeignet, da die nach oben gerichtete Einstülpung das Entfaltungsverhalten im Auslösefall ungewollt beeinflussen kann.

Weitere Curtainairbagmodule sind aus der US 2007/075530 A1, aus der DE 11 2004 000671 T5, aus der US 2018/208146 A1 und aus der KR 2014 0084977 A bekannt. Die hierin gezeigten Gassäcke sind unterschiedlich gefaltet bzw. gerollt und weisen Einstülpungen auch in andere Richtungen auf. US2007/075530 A1 zeigt einen Gassackmodul nach dem Oberbegriff des Anspruchs 1. Doch auch diese Gassackmodule weisen kein optimales Entfaltungsverhalten im Auslösefall auf.

Der Erfindung liegt daher die Aufgabe zugrunde, ein Airbagmodul zu schaffen, das ein verbessertes Entfaltungsverhalten aufweist. Daneben soll ein Verfahren zur Herstellung eines solchen Airbagmoduls angegeben werden.

Für ein Airbagmodul der eingangs genannten Art wird die Aufgabe erfindungsgemäß durch die Merkmale des Anspruchs 1 gelöst.

Das Airbagmodul ist so ausgebildet, dass der aufblasbare Gassack entlang seiner Längserstreckung L eine Mehrzahl von zu einander parallelen Querschnittsebenen EQ, EQ aufweist, wobei eine, durch die in einer ersten Querschnittsebene EQ nebeneinander liegenden Schenkel definierte, erste Mittelebene EM eine, durch die in einer zweiten Querschnittsebene EQ nebeneinander liegenden Schenkel definierte, zweite Mittelebene EM schneidet.

Indem also der Gassack so gestaltet ist, dass die Orientierung der C-förmigen Gestaltung an verschiedenen Stellen entlang seiner Längserstreckung verschieden (seitlich nach innen oder nach außen, nach oben oder nach unten, horizontal, vertikal oder diagonal angeordnet) ist, kann insbesondere das primäre Aufblasverhalten, insbesondere die initiale und die primäre Ausbreitungsrichtung des Gassackes auf die fahrzeugspezifischen Bedürfnisse angepaßt werden. So kann beispielsweise die offene Seite der C-förmigen Gestaltung am vorderen Ende des Gassackes zur Karosserie hin, in einem mittleren Abschnitt beispielsweise nach innen (von der Karosserie weg) und in einem hinteren Bereich nach schräg außen und schräg unten weisen. Das individuale Aufblasverhalten kann erfindungsgemäß also über die Länge des Gassackes unterschiedlich ausgebildet werden. Gemäß einer Ausführungsform der Erfindung ist das Airbagmodul so ausgebildet, dass benachbart zu zumindest einem der nebeneinander liegenden Schenkel und/oder zu einem diese verbindenden Abschnitt der C-förmigen Gestaltung ein weiterer Abschnitt des Gassackes angeordnet ist.

Indem also der Gassack so gestaltet ist, dass zusätzlich zu dem C-förmigen gestalteten Bereich des Gassackes ein weiterer ggf. auch anders gestalteter Bereich vorgesehen ist, kann auch das sekundäre Aufblasverhalten, insbesondere die während des Aufblasens spätere Ausbreitungsrichtung des Gassackes auf die fahrzeugspezifischen Bedürfnisse angepaßt werden.

Gemäß einer bevorzugten Ausführungsform der Erfindung ist der Gasssack in Richtung seiner Längserstreckung L innerhalb seiner C-förmigen Gestaltung gerollt und/ oder zig-zag gefaltet.

Auch ist bevorzugt, dass der Gasssack in Richtung seiner Längserstreckung L im Bereich seines weiteren Abschnittes gerollt und/ oder zig-zag gefaltet ist.

Hierdurch kann das Aufblasverhalten weiter an die jeweiligen Fahrzeugverhältnisse angepaßt bzw. verbessert werden.

Der Gasssack weist entlang seiner Längserstreckung L eine Mehrzahl von Befestigungslaschen zur Aufnahme von Befestigungseinrichtungen zur Anbringung des Airbagmoduls an einem Fahrzeug auf. Hierbei ist der Gassack vorzugsweise derart gestaltet, dass die Befestigungslaschen in einer Einbausituation des Gassackes im Wesentlichen parallel zur Vertikalebene EV angeordnet. Gemäß einer ersten Ausführungsform der Erfindung können sich die Befestigungslaschen von dem ersten Schenkel erstrecken.

Alternativ können die Befestigungslaschen von dem verbindenden Abschnitt erstrecken.

In einer weiteren Alternative können sich die Befestigungslaschen von dem weiteren Abschnitt erstrecken.

Auch durch jedes dieser Markmale kann das Aufblasverhalten weiter an die jeweiligen Fahrzeugverhältnisse angepaßt bzw. verbessert werden.

Gemäß einer bevorzugten Ausführungsform der Erfindung ist vorgesehen, dass der Gassack entlang seiner Längserstreckung L eine Mehrzahl von Längsabschnitten aufweist und derart in dem Airbagmodul angeordnet ist, dass eine erste offene Seite einer ersten C-förmigen Gestaltung in einem ersten Längsabschnitt, insbesondere in einer Einbausituation des Gassackes, so positionierbar bzw. positioniert ist, dass sie in eine andere Richtung weist, als eine andere offene Seite einer anderen C-förmigen Gestaltung in einem anderen Längsabschnitt des Gassackes.

Je nach beabsichtigtem Einsatz- und Schutzzweck kann es sich bei jeder der bevorzugten Ausführungsformen der Erfindung um eines der folgenden Airbagmodule handeln: Frontalaufprallschutzeinrichtung, insbesondere Fahrerairbagmodul, Beifahrerairbagmodul oder Knieairbagmodul, Seitenaufprallschutzeinrichtung, insbesondere Thoraxairbagmodul oder Curtainairbagmodul, Heckaufprallschutzeinrichtung, Interaktionsairbagmodul, Schrägaufprallmodul Rücksitzinsassenmodul, aufblasbarer Gurt, aufblasbare Außenaufprallschutzeinrichtung.

Bei jeder der erfindungsgemäßen Ausführungsformen ist weiterhin bevorzugt, dass der Gassack entlang seiner Längserstreckung L eine Mehrzahl von voneinander beabstandeten, ringförmig den Gassack umgebenden, insbesondere bandartigen, Halteelementen aufweist, die ausgebildet sind, den Gassack in seinem zur Montage am Kraftfahrzeug vorgesehenen Gestaltung zu bewahren.

Grundsätzlich ist bei jeder der beschriebenen Ausführungsformen festzuhalten, dass die C-förmige Gestaltung, insbesondere in Verbindung mit den bandartigen Halteelementen, z.B. ringförmigen Klebestreifen, die Tendenz des Gassackes, sich um seine Längserstreckung zu verdrehen bzw. verdreht zu werden, um bis zu 50% reduziert. Darüber hinaus weist der Gassack bei solcher Verdrehung eine Tendenz zur Rückkehr in die ursprüngliche Lage auf, weshalb zusätzliche Anti-Rotationseinrichtungen, z.B. "anti-twist straps" entbehrlich werden.

Hierbei weist ein erfindungsgemäßes Airbagmodul einen aufblasbaren Gassack, einen Gasgenerator zum Aufblasen des Gassackes und eine Mehrzahl von Befestigungseinrichtungen zur Anbringung des Airbagmoduls an einem Fahrzeug auf, wobei der Gassack in einer gedachten Querschnittsebene EQ quer zu seiner Längserstreckung L eine C-förmige Gestaltung mit zwei nebeneinander angeordneten Schenkeln aufweist, die vorzugsweise mit den bandartigen Halteelementen fixiert sind.

Durch die Verwendung eines solchen Airbagmoduls wird die Montage des Gassackmoduls im Fahrzeugkörper erheblich sicherer gemacht, da ein unbeabsichtigtes Verdrehen des Gassackes während der Montage quasi ausgeschlossen wird.

Gemäß einem Verfahrensaspekt der Erfindung wird die zuvor beschriebene Aufgebe erfindungsgemäß gelöst durch ein Verfahren zur Herstellung eines Airbagmoduls der zuvor beschriebenen Art, bei dem ein Gassack, insbesondere quer zu seiner Längserstreckung LR zu einem langgestreckten Paket gerollt und/ oder gefaltet wird, und bei dem sodann seitliche Ränder des Paketes zumindest abschnittsweise zu einander gebracht und (vorzugsweise) fixiert werden, so dass der Gassack in einer gedachten Querschnittsebene EQ quer zu seiner Längserstreckung L eine C-förmige Gestaltung mit zwei nebeneinander liegenden Schenkeln , aufweist, wobei der aufblasbare Gassack entlang seiner Längserstreckung L eine Mehrzahl von zu einander parallelen Querschnittsebenen EQ, EQ aufweist, und wobei eine, durch die in einer ersten Querschnittsebene EQ nebeneinander liegenden Schenkel definierte, erste Mittelebene EM eine, durch die in einer zweiten Querschnittsebene EQ nebeneinander liegenden Schenkel definierte, zweite Mittelebene EM schneidet.

In einem gesonderten bevorzugten Schritt wird benachbart zu zumindest einem der nebeneinander liegenden Schenkel und/oder zu einem diese Schenkel verbindenden Abschnitt der C-förmigen Gestaltung ein weiterer Abschnitt des Gassackes angeordnet.

Vorzugsweise wird dieser weitere Abschnitt des Gassackes separat von der C-förmigen Gestaltung des Gassackes gerollt und/ oder zig-zag gefaltet.

Es sind vorzugsweise Schritte vorgesehen, bei denen:
der Gasssack in Richtung seiner Längserstreckung L innerhalb seiner C-förmigen Gestaltung gerollt und/ oder zig-zag gefaltet wird, und/ oder der Gasssack in Richtung seiner Längserstreckung L im Bereich seines weiteren Abschnittes gerollt und/ oder zig-zag gefaltet ist.

Gemäß einem weiteren bevorzugten Schritt wird ein Gassackzuschnitt verwendet, der entlang seiner Längserstreckung L eine Mehrzahl von Befestigungslaschen zur Aufnahme von Befestigungseinrichtungen zur Anbringung des Airbagmoduls an einem Fahrzeug aufweist. Alternativ können diese Befestigungslaschen auch nachtäglich an dem Gassackzuschnitt angebracht werden.

Gemäß einem weiteren bevorzugten Schritt wird der Gassack derart gestaltet, dass die Befestigungslaschen in einer Einbausituation des Gassackes im Wesentlichen parallel zur Vertikalebene EV angeordnet sind.

Gemäß einem anderen bevorzugten Schritt wird der Gassack so ausgebildet, dass sich die Befestigungslaschen von dem ersten Schenkel erstrecken. Alternativ können sich die Befestigungslaschen von dem verbindenden Abschnitt erstrecken. In einer weiteren Alternative können sich die Befestigungslaschen von dem weiteren Abschnitt erstrecken. Gemäß einer bevorzugten Ausführungsform des erfindungsgemäßen Verfahrens ist vorgesehen, dass der Gassack so geformt, insbesondere gerollt und/ oder gefaltet wird, dass er entlang seiner Längserstreckung L eine Mehrzahl von Längsabschnitten aufweist und derart in dem Airbagmodul angeordnet wird, dass eine erste offene Seite einer ersten C-förmigen Gestaltung in einem ersten Längsabschnitt insbesondere in einer Einbausituation des Gassackes, so positionierbar bzw. positioniert ist, dass sie in eine andere Richtung weist, als eine andere offene Seite einer anderen C-förmigen Gestaltung in einem anderen Längsabschnitt des Gassackes.

Weiterhin ist bevorzugt, dass der Gassack entlang seiner Längserstreckung L mit einer Mehrzahl von voneinander beabstandeten, ringförmig den Gassack umgebenden, insbesondere bandartigen, Halteelementen versehen wird, die ausgebildet sind, den Gassack in seinem zur Montage am Kraftfahrzeug vorgesehenen Gestaltung zu bewahren. Alternativ kann der Gassack bzw. wesentliche Bereiche davon auch mit einem Montageschlauch umgeben werden.

Die Vorteile und Wirkungen der zuvor beschriebenen Verfahren bzw. Verfahrensvarianten und Verfahrensschritte entsprechen den Vorteilen Wirkungen der zuvor beschriebenen Airbagmodule und ihren jeweiligen Ausführungsformen.

Im Folgenden wird die Erfindung mit weiteren Einzelheiten anhand bevorzugter Ausführungsformen unter Bezugnahme auf die beigefügte Zeichnung näher erläutert. Darin zeigen:
- Figur 1: eine Seitenansicht einer ersten Ausführungsform eines erfindungsgemäßen Airbagmoduls,
- Figur 2: eine Querschnittsansicht des in Figur 1 gezeigten Airbagmoduls in einer ersten Ausführungsvariante,
- Figur 3: eine Querschnittsansicht des in Figur 1 gezeigten Airbagmoduls in einer zweiten Ausführungsvariante,
- Figuren 4a-c: Querschnittsansichten des in Figur 1 gezeigten Airbagmoduls durch verschiedene Längsabschnitte entlang seiner Längserstreckung, und
- Figuren 5a-e: Ansichten einzelner Schritte des erfindungsgemäßen Herstellungsverfahrens.

Auch wenn die Erfindung auf alle zuvor beschriebenen Arten von Gassäcken bzw. Airbagmodulen anwendbar ist, wird sie zum besseren Verständnis im Folgenden anhand eines Curtainairbagmoduls näher erläutert:

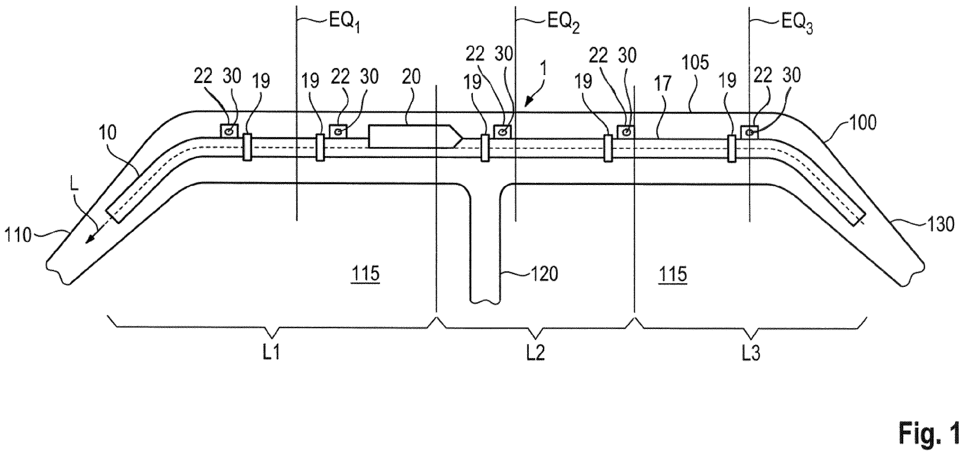

In Figur 1 ist eine Seitenansicht erster Ausführungsform des erfindungsgemäßen Airbagmoduls 1 am Beispiel eines Curtainairbagmoduls in seiner Einbausituation in einer Fahrzeugkarosserie 100. Das Airbagmodul umfasst einen aufblasbaren Gassack 10, einen Gasgenerator 20 zum Aufblasen des Gassackes 10 und eine Mehrzahl von Befestigungseinrichtungen 30 zur Anbringung des Airbagmoduls an der Innenseite des Fahrzeugs, hier am Dachrahmen 105 oberhalb der Seitenfenster 115. Das Airbagmodul 1 erstreckt sich von der A-Säule 110 über die B-Säule 120 hinweg bis zur C- (oder D-) Säule 130.

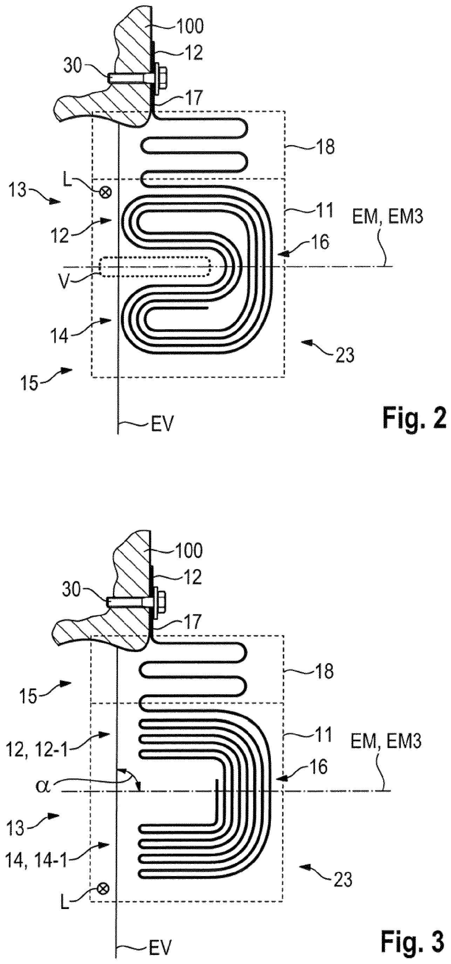

Figur 2 zeigt eine Schnittansicht durch das Airbagmodul 1 in seiner Einbausituation (eingebaut im Ruhezustand vor Aktivierung bzw. im Zustand, in das Fahrzeug eingebaut zu werden) in einer gedachten Querschnittsebene EQ3 quer zu einer Längserstreckung L des Gassackes, die in Fig. 1 strichliert eingezeichnet ist. Wie dargestellt, weist der Gassack eine C-förmige Gestaltung 11 mit zwei nebeneinander liegenden Schenkeln 12, 14 auf. Unter dem Begriff "Gestaltung" wird eine "Roll"-Faltung oder eine "Zig-zag-Faltung" oder eine Kombination dieser Faltungsvarianten verstanden. Zum Erlangen einer C-förmigen Gestaltung 11 wird der aufgerollte ("roll-gefaltete") oder zig-zag-gefaltete Abschnitt eines aus Gassackzuschnitten zusammengenähten bzw. einstückig gewebten Gassackrohlings (OPW) von einer Seite mit einer stab- oder plattenförmigen Vorrichtung V (in Fig. 2 gepunktet angedeutet) eingedrückt. Hierdurch entstehen zwei Schenkel 12, 14 aus dem so gefalteten Gassackrohling, die sodann aneinander bzw. aufeinander gelegt werden, dass sie in dieselbe Richtung zeigen. Die Seite der C-förmigen Gestaltung, auf der sich die freien Enden der Schenkel 12, 14 befinden, wird als "offene Seite" 13 bezeichnet. Der auf der gegenüber der offenen Seite liegende die beiden Schenkel 12, 14 verbindente Teil der C-förmigen Gestaltung 11 wird als verbindender Abschnitt 16 bezeichnet.

Zwischen den beiden Schenkeln 12, 14 wird ein Mittelebene EM definiert. Gemäß einer ersten Ausführungsform der Erfindung schneidet die Mittelebene EM eine sich durch die Längserstreckung L des Gassackes 10 ersteckende, Vertikalebene EV in der in Figur 2 gezeigten Querschnittsebene EQ (EQ3).

insbesondere umfasst die C-förmige Gestaltung 11 zumindest drei (wie in der Figur 3 gezeigt), vorzugsweise vier oder mehr vollständige Windungen des Gassackrohlings.

Die Darstellung der Figur 3 entspricht im Wesentlichen der Figur 2, zeigt jedoch einen Gassack 10, dessen C-förmige Gestaltung 11 aus einem zig-zag gefalteten Abschnitt geformt ist. Denkbar ist auch eine Kombination einer Rollfaltung und einer zig-zag Faltung. insbesondere umfasst die C-förmige Gestaltung 11 zumindest drei, vorzugsweise vier (wie in der Figur 3 gezeigt) oder mehr Faltlagen. Eine Faltlage besteht hierbei aus einer vor und einer wieder zurückgelegten Bahn des Gassackrohlings (also zwei Lagen von zwei aufeinanderliegenden bzw. zusammengewebten Stoffbahnen).

Bei allen beschriebenen Ausführungsformen kann die äußere Form der C-förmige Gestaltung 11 in ihrem Querschnitt rund, oval, halbrund, rechteckig, quadratisch geformt oder in anderer Form and die Bauraumverhältnisse der Fahrzeugkarosserie 100 angepasst gestaltet werden bzw. sein.

Hierzu wird vor oder beim Eindrücken des aufgerollten ("roll-gefalteten") und/ oder zig-zaggefalteten Abschnittes des Gassackrohlings dieser in eine entsprechende Form mit gewünschter Außenkontur gedrückt. Die Formgebung kann entlang der Längserstreckung des Gassackes 10 unterschiedlich sein, um den Gassack 10 an die unterschiedlichen Platzverhältnisse an den jeweiligen Stellen der Karosserie 100 anpassen zu können.

Bei dem Airbagmodul 1 gemäß der Figuren 2 und 3 weist der Gassack 10 gemäß eines bevorzugten Aspektes der Erfindung, zusätzlich zu der C-förmigen Gestaltung 11 einen weiteren Abschnitt 18 auf.

Dieser weitere Abschnitt 18 kann ebenfalls aufgerollt ("roll-gefaltet") oder zig-zag-gefaltet sein. Insbesondere umfasst der weitere Abschnitt 18 zumindest zwei (wie in den Figuren 2 und 3 gezeigt), vorzugsweise drei oder vier, Faltlagen. Eine Faltlage besteht hierbei aus einer vor und einer wieder zurückgelegten Gassacklage (also zwei Schichten von zwei aufeinanderliegenden bzw. zusammengewebten Stoffbahnen).

Der weitere Abschnitt 18 kann benachbart zu zumindest einem der nebeneinander liegenden Schenkel 12, 14 und/oder zu dem diese verbindenden Abschnitt 16 der des Gassackes 10 angeordnet sein.

Der weitere Abschnitt 18 kann sich unmittelbar an einem der nebeneinander liegenden Schenkel 12, 14 oder an den diese verbindenden Abschnitt 16 und/ oder an eine oberen Rand 17 des Gassackes 10 anschließen, an dem die zuvor erwähnten Befestigungseinrichtungen 30 des Airbagmoduls 1 angeordnet sind.

Auch kann der (und/oder ein zweiter) weitere Abschnitt unterhalb, also entfernt von dem oberen Rand 17, an der C-förmigen Gestaltung 11 ausgebildet sein und somit einen unteren Rand des Gassackes umfassen.

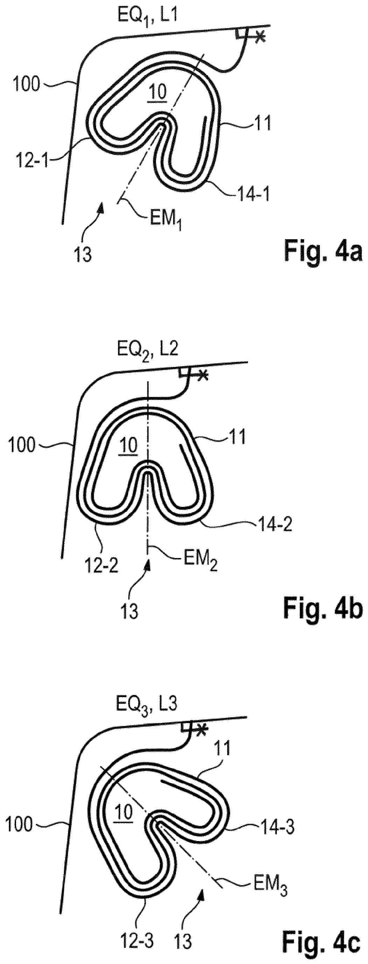

Wie in Figur 1 dargestellt, kann das Airbagmodul 1 einen Gassack 10 mit mehreren Längsabschnitten L1, L2, L3 aufweisen. In jeder dieser Längsabschnitte ist eine zugehörige (zu einander parallele) Querschnittsebene EQ1, EQ2, EQ3 definiert. Gemäß der Erfindung schneidet bzw. kreuzt eine, durch die in einer ersten Querschnittsebene EQ1 nebeneinander liegenden Schenkel 12-1, 14-1 definierte, erste Mittelebene EM1 eine, durch die in einer zweiten Querschnittsebene EQ2 nebeneinander liegenden Schenkel 12-2, 14-2 definierte, zweite Mittelebene EM2. Zum besseren Verständnis sind in den Figuren 4a -c Ansichten der jeweiligen Querschnittsebenen EQ1, EQ2, EQ3 (Zeichnungsebene) durch den Gassack 10 und insbesondere durch seine C-förmige Gestaltung dargestellt. Die jeweiligen Mittelebenen EQ1, EQ2, EQ3 erstecken sich senkrecht zur Zeichnungsebene und sind folglich als Linien dargestellt, die zwischen den jeweiligen Schenkeln 12-i, 14-i des quer geschnittenen Gassackes 10 positioniert sind. Es ist ersichtlich, dass die Richtungen der jeweiligen Mittelebenen (und somit die Orientierung der offenen Seite 13i der C-förmigen Gestaltungen 11i in den einzelnen Längsabschnitten Li individuell ausgerichtet sind. Legt man die drei Figuren 4a-c übereinander, so erkennt man deutlich die Kreuzung der Ebenen EM1-3 untereinander. Im dargestellten Beispiel führt dies zu den folgenden Entfaltungsverhalten der jeweiligen Abschnitte Li des Gassackes 10:
Bei der in Fig. 4a gezeigten Anordnung zeigt die offene Seite 13 schräg abwärts nach außen, was zu einer mehr nach außen gerichteten Entfaltung des Gassackes 10 führt. Bei der in Fig. 4b gezeigten Anordnung zeigt die offene Seite 13 vertikal nach unten, was zu einer (normalen) Entfaltung des Gassackes 10 nach unten führt. Bei der in Fig. 4c gezeigten Anordnung zeigt die offene Seite 13 schräg abwärts nach innen, was zu einer mehr nach innen gerichteten Entfaltung des Gassackes 10 führt.

Natürlich können entlang der Längserstreckung L des Gassackes auch weniger oder mehr als drei Längsabschnitte Li vorgesehen sein. Ebenso ist es möglich, die jeweilige Orientierung der offenen Seite 13 der C-förmigen Gestaltung 11 in verschiedenen (benachbarten oder voneinander beabstandeten) Längsabschnitten Li, Lj gleich auszubilden. In Figur 1 ist ferner dargestellt, dass der Gassack 10 entlang seiner Längserstreckung L eine Mehrzahl von Befestigungslaschen 22 zur Aufnahme von Befestigungseinrichtungen 30, insbesondere Befestigungsclips oder -schrauben zur Anbringung des Airbagmoduls 1 an einem Fahrzeug aufweist. Die Orientierung der Befestigungslaschen 22 ist in einer definierten Einbausituation des Gassackes 10 im Wesentlichen parallel zur einer (in den Figuren 2, 3 gezeigten) Vertikalebene EV des Kraftfahrzeuges.

Je nach Ausführung des Gassackes können sich die Befestigungslaschen 22 von dem ersten Schenkel 12, von dem zweiten Schenkel 14, von dem verbindenden Abschnitt 16 oder von dem weiteren Abschnitt 18 erstrecken.

Um den fertig gefalteten und mit Gasgenerator 20 zu einem Airbagmodul verbundenen Gassack 10 in seiner zur Montage am Kraftfahrzeug vorgesehenen Gestaltung zu bewahren, sind entlang seiner Längserstreckung L eine Mehrzahl von voneinander beabstandeten, ringförmig den Gassack 10 umgebende, insbesondere bandartige, Halteelemente 19 vorgesehen. Einige dieser sind schematisch in Figur 1 gezeigt. Auch, wenn alternativ ein Montageschlauch denkbar wäre, weist jedoch die Anbringung getrennter Halteelemente, z.B. mit Sollbruchstellen versehener (Klebe-)Bänder den Vorteil auf, dass die einzelnen unterschiedlich gefalteten Bereiche des den Gassack (10) individuell und auf Dauer in Form zu halten.

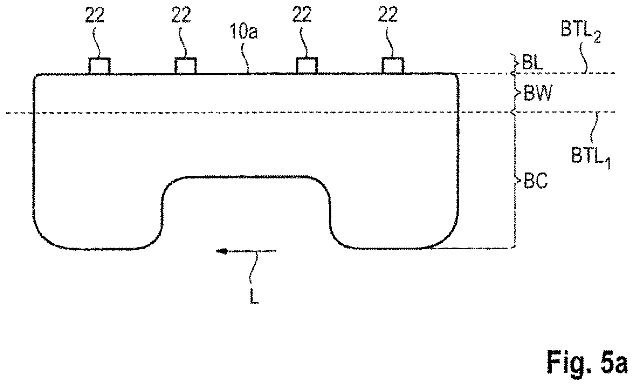

Unter Bezugnahme auf Figuren 5a-e wird im Folgenden die Herstellung eines erfindungsgemäßen Airbagmoduls 1 erläutert:
Zunächst wird ein vernähter Gassackzuschnitt bzw. ein einstückig gewebter Gassack (OPW) als "Gassackrohling 10a" flach bereitgestellt. Er wird in zumindest einen ein ersten (z.B. unterhalb einer Bereichstrennlinie BTL definierten) Bereichsabschnitt BC und in zumindest einen zweiten (z.B. oberhalb der Bereichstrennlinie BTL1 definierten Bereichsabschnitt BW eingeteilt.

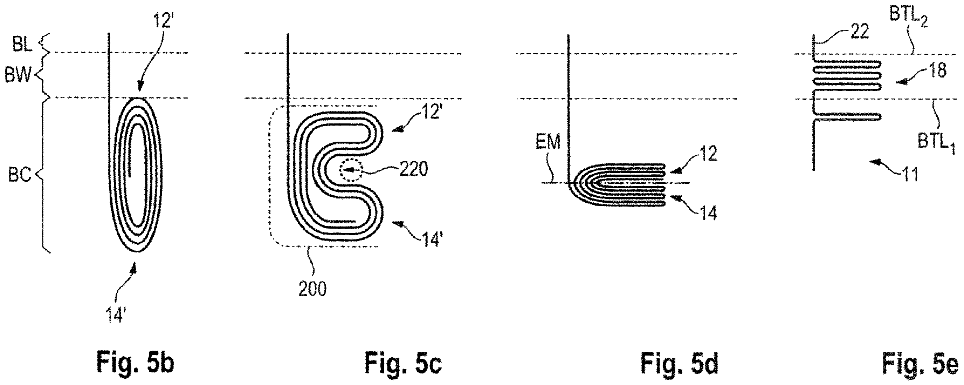

In einem weiteren, in Fig. 5b skizzierten Schritt wird der erste (z.B. untere) Bereichsabschnitt BC des Gassackrohlings 10a quer zu seiner Längserstreckung L zu einem langgestreckten Paket gerollt und/ oder gefaltet.

In einem weiteren, in Fig. 5c skizzierten Schritt werden seitliche Ränder 12', 14' des Paketes zumindest abschnittsweise zu einander gebracht. Dies kann z.B. mit einem Stab 200, einer Stange, einer Platte, oder einem E-förmigen Werkzeug erfolgen. Hierbei kann der Bereich BC vorzugsweise in eine (U-förmige) Aufnahmeeinrichtung 200 gedrückt werden, so dass der Gassack 10 in seinem Bereichsabschnitt BC in einer gedachten Querschnittsebene EQ quer zu seiner Längserstreckung L eine C-förmige Gestaltung 11 mit zwei nebeneinander liegenden Schenkeln 12, 14 aufweist, wie in Fig. 5d gezeigt.

In einem weiteren, in Fig. 5e skizzierten Schritt wird der zweite (z.B. mittlere) Bereichsabschnitt BW des Gassackrohlings 10a quer zu seiner Längserstreckung L zu einem langgestreckten Paket gefaltet und/ oder gerollt, so dass ein weiterer (roll- oder zig-zag-gefalteter) Abschnitt 18 des Gassackes 10 entsteht.

Der weitere Abschnitt 18 kann, wie in Fig. 5e gezeigt, oberhalb der C-förmigen Gestaltung 11 angeordnet sein; er kann aber auch unterhalb der C-förmigen Gestaltung 11 vorgesehen sein.

Jedenfalls sind in einem Bereich BL am oberen Ende des Gassackes 10 (oberhalb einer zweiten Bereichstrennlinie BTL2) die Befestigungslaschen 22 ausgebildet, über die der Gassack am Fahrzeug 100 befestigbar ist.

Selbstverständlich ist es möglich, den Schritt des Faltens und Formens des weiteren Abschnittes 18 auch vor dem Schritt des Faltens und Formens der C-förmigen Gestaltung 11 durchzuführen.

In einem weiteren Schritt wird der Gassack 10 relativ zu einem Gasgenerator 20 des Airbagmoduls 1 ausgerichtet, insbesondere wie bereits zuvor beschrieben, und mit diesem gasdicht gekoppelt.

In einem weiteren Schritt wird der Gassack 10 mit einer Mehrzahl von voneinander beabstandeten, ringförmig den Gassack 10 umgebende, insbesondere bandartigen, Halteelementen 19 versehen, um den fertig gefalteten Gassack 10 in seiner zur Montage am Kraftfahrzeug vorgesehenen Gestaltung zu bewahren.

In einem weiteren Schritt werden die Befestigungselemente 30 zur Anbringung des Airbagmoduls 1 an dem Fahrzeug 100 ausgerichtet und an den Befestigungslaschen 22 des Gassackes befestigt.

Die beschriebenen Schritte des erfindungsgemäßen Verfahrens sind nach optimaler Fertigungsabfolge untereinander kombinierbar, wobei einzelne Schritte bei Bedarf ausgelassen werden können.

## Patentansprüche

1. Airbagmodul mit einem aufblasbaren Gassack (10), einem Gasgenerator (20) zum Aufblasen des Gassackes (10) und mit einer Mehrzahl von Befestigungseinrichtungen (30) zur Anbringung des Airbagmoduls an einem Fahrzeug, wobei der Gassack (10) im Ruhezustand vor Aktivierung in einer gedachten Querschnittsebene (EQ) quer zu seiner Längserstreckung (L) eine C-förmige Gestaltung (11) mit zwei nebeneinander liegenden Schenkeln (12, 14) aufweist, **dadurch gekennzeichnet, dass** der aufblasbare Gassack (10) entlang seiner Längserstreckung (L) eine Mehrzahl von zu einander parallelen Querschnittsebenen (EQ1, EQ2) aufweist, wobei eine, durch die in einer ersten Querschnittsebene (EQ1) nebeneinander liegenden Schenkel (12-1, 14-1) definierte, erste Mittelebene (EM1) eine, durch die in einer zweiten Querschnittsebene (EQ2) nebeneinander liegenden Schenkel (12-2, 14-2) definierte, zweite Mittelebene (EM2) schneidet.

2. Airbagmodul nach Anspruch 1, **dadurch gekennzeichnet, dass** benachbart zu zumindest einem der nebeneinander liegenden Schenkel (12, 14) und/oder zu einem diese verbindenden Abschnitt (16) der C-förmigen Gestaltung (11) ein weiterer Abschnitt (18) des Gassackes (10) angeordnet ist.

3. Airbagmodul nach Anspruch 1 oder 2, **dadurch gekennzeichnet, dass** der Gassack (10) in Richtung seiner Längserstreckung (L) innerhalb seiner C-förmigen Gestaltung (11) gerollt und/ oder zig-zag gefaltet ist, und/ oder, dass der Gassack (10) in Richtung seiner Längserstreckung (L) im Bereich seines weiteren Abschnittes (18) gerollt und/ oder zig-zag gefaltet ist.

4. Airbagmodul nach einem der voranstehenden Ansprüche 1 bis 3, **dadurch gekennzeichnet, dass** der Gassack (10) entlang seiner Längserstreckung (L) eine Mehrzahl von Befestigungslaschen (22) zur Aufnahme von Befestigungseinrichtungen (30) zur Anbringung des Airbagmoduls (1) an einem Fahrzeug aufweist, wobei sich die Befestigungslaschen (22) von dem ersten Schenkel (12) oder von dem verbindenden Abschnitt (16) oder von dem weiteren Abschnitt (18) erstrecken.

5. Airbagmodul nach einem der voranstehenden Ansprüche 1 bis 4, **dadurch gekennzeichnet, dass** der Gassack (10) derart in dem Airbagmodul (1) angeordnet ist, dass in einer gedachten Querschnittsebene (EQ) eine offene Seite (13) der C-förmigen Gestaltung (11), insbesondere in einer Einbausituation des Gassackes (10), so positionierbar bzw. positioniert ist, dass die offene Seite (13) der C-förmigen Gestaltung (11) zu einer Karosserieseite (15) des Airbagmoduls (1) oder zu einer der Karosserieseite (15) abgewandten Seite (23) des Airbagmoduls (1) und/ oder nach oben oder nach unten, insbesondere diagonal nach oben oder diagonal nach unten, weist.

6. Airbagmodul nach einem der voranstehenden Ansprüche 1 bis 5, **dadurch gekennzeichnet, dass** der Gassack (10) entlang seiner Längserstreckung (L) eine Mehrzahl von Längsabschnitten (LA1, LA2, LA3) aufweist und derart in dem Airbagmodul (1) angeordnet ist, dass eine erste offene Seite (13-1) einer ersten C-förmigen Gestaltung (11-1), insbesondere in einer Einbausituation des Gassackes (10), so positionierbar bzw. positioniert ist, dass sie in eine andere Richtung weist, als eine andere offene Seite (13-2) einer anderen C-förmigen Gestaltung (11-2) des Gassackes.

7. Airbagmodul nach einem der voranstehenden Ansprüche 1 bis 6, **dadurch gekennzeichnet, dass** der Gassack (10) entlang seiner Längserstreckung (L) eine Mehrzahl von voneinander beabstandeten, ringförmig den Gassack (10) umgebenden, insbesondere bandartigen, Halteelementen (19) aufweist, die ausgebildet sind, den Gassack (10) in seiner zur Montage am Kraftfahrzeug vorgesehenen Gestaltung zu bewahren.

8. Verfahren zur Herstellung eines Airbagmoduls (1) nach einem der Ansprüche 1 bis 7, bei dem ein Gassack quer zu seiner Längserstreckung (LR) zu einem langgestreckten Paket gerollt und/ oder gefaltet wird, und bei dem sodann seitliche Ränder des Paketes zumindest abschnittsweise zu einander gebracht und vorzugsweise fixiert werden, so dass der Gassack (10) in einer gedachten Querschnittsebene (EQ) quer zu seiner Längserstreckung (L) eine C-förmige Gestaltung (11) mit zwei nebeneinander liegenden Schenkeln (12, 14) aufweist, wobei der aufblasbare Gassack (10) entlang seiner Längserstreckung (L) eine Mehrzahl von zu einander parallelen Querschnittsebenen (EQ1, EQ2) aufweist, und wobei eine, durch die in einer ersten Querschnittsebene (EQ1) nebeneinander liegenden Schenkel (12-1, 14-1) definierte, erste Mittelebene (EM1) eine, durch die in einer zweiten Querschnittsebene (EQ2) nebeneinander liegenden Schenkel (12-2, 14-2) definierte, zweite Mittelebene (EM2) schneidet.

## Claims

1. An airbag module comprising an inflatable airbag (10), an inflator (20) for inflating the airbag (10) and comprising a plurality of securing units (30) for attaching the airbag module to a vehicle, wherein, in a resting state prior to actuation, the airbag (10) has a C-shaped configuration (11) including two juxtaposed legs (12, 14) in an imaginary cross-sectional plane (EQ) transversely to its longitudinal extension (L), **characterized in that** along its longitudinal extension (L) the inflatable airbag (10) includes a plurality of cross-sectional planes (EQ1, EQ2) in parallel to each other, wherein a first central plane (EM1) defined by the legs (12-1, 14-1) juxtaposed in a first cross-sectional plane (EQ1) intersects a second central plane (EM2) defined by the legs (12-2, 14-2) juxtaposed in a second cross-sectional plane (EQ2).

2. The airbag module according to claim 1, **characterized in that** another portion (18) of the airbag (10) is arranged adjacent to at least one of the juxtaposed legs (12, 14) and/or to a portion (16) of the C-shaped configuration (11) connecting said legs.

3. The airbag module according to claim 1 or 2, **characterized in that** the airbag (10) is rolled and/or zigzag folded in the direction of its longitudinal extension (L) within its C-shaped configuration (11), and/or **in that** the airbag (10) is rolled and/or zigzag folded in the direction of its longitudinal extension (L) in the area of its further portion (18).

4. The airbag module according to one of the preceding claims 1 to 3,
**characterized in that** along its longitudinal extension (L) the airbag (10) includes a plurality of securing straps (22) for receiving securing units (30) for attaching the airbag module (1) to a vehicle, wherein, the securing straps (22) extend from the first leg (12) or from the connecting portion (16) or from the further portion (18).

5. The airbag module according to one of the preceding claims 1 to 4,
**characterized in that** the airbag (10) is arranged within the airbag module (1) such that in an imaginary cross-sectional plane (EQ) an open side (13) of the C-shaped configuration (11), especially in a mounting situation of the airbag (10), can be or is positioned so that the open side (13) of the C-shaped configuration (11) points to a body side (15) of the airbag module (1) or to a side (23) of the airbag module (1) facing away from the body side (15) and/or upwards or downwards, especially diagonally upwards or diagonally downwards.

6. The airbag module according to one of the preceding claims 1 to 5,
**characterized in that** along its longitudinal extension (L) the airbag (10) includes a plurality of longitudinal portions (LA1, LA2, LA3) and is arranged in the airbag module (1) such that a first open side (13-1) of a first C-shaped configuration (11-1) can be or is positioned, especially in a mounting situation of the airbag (10), so that it points to a direction other than a different open side (13-2) of a different C-shaped configuration (11-2) of the airbag.

7. The airbag module according to one of the preceding claims 1 to 6,
**characterized in that,** along its longitudinal extension (L), the airbag (10) includes a plurality of especially strip-shaped retaining elements (19) being spaced apart from each other and annularly surrounding the airbag (10) which are designed to maintain the airbag (10) in its configuration provided for mounting to the vehicle.

8. A method of manufacturing an airbag module (1), especially an airbag module (1) according to one of the claims 1 to 7, in which an airbag is rolled and/or folded, especially transversely to its longitudinal extension (LR), to form an elongate package and in which then lateral edges of the package are moved toward each other at least in portions and are preferably fixed, so that the airbag (10) has a C-shaped configuration (11) including two juxtaposed legs (12, 14) in an imaginary cross-sectional plane (EQ) transversely to its longitudinal extension (L), and wherein along its longitudinal extension (L) the inflatable airbag (10) includes a plurality of cross-sectional planes (EQ1, EQ2) parallel to each other and wherein a first central plane (EM1) defined by the legs (12-1, 14-1) juxtaposed in a first cross-sectional plane (EQ1) intersects a second central plane (EM2) defined by the legs (12-2, 14-2) juxtaposed in a second cross-sectional plane (EQ2).

## Revendications

1. Module airbag avec un coussin gonflable (10), un générateur de gaz (20) pour gonfler le coussin gonflable (10) et avec une pluralité de dispositifs de fixation (30) pour monter le module airbag sur un véhicule, pour lequel le coussin gonflable (10) présente à l'état de repos avant activation dans un plan de section imaginaire (EQ) transversalement à son extension longitudinale (L) une configuration en forme de C (11) avec deux branches (12, 14) situées l'une à côté de l'autre, **caractérisé, en ce que** le coussin gonflable (10) présente, le long de son étendue longitudinale (L), une pluralité de plans transversaux (EQ1, EQ2) parallèles les uns aux autres, pour lequel un premier plan médian (EM1), défini par les branches (12-1, 14-1) situées les unes à côté des autres dans un premier plan transversal (EQ1), coupe un deuxième plan médian (EM2) défini par les branches (12-2, 14-2) situées les unes à côté des autres dans un deuxième plan transversal (EQ2).

2. Module airbag selon la revendication 1, **caractérisé en ce qu'**une section supplémentaire (18) du coussin gonflable (10) est disposée au voisinage d'au moins l'une des branches (12, 14) situées l'une à côté de l'autre et/ou d'une section de liaison (16) de la configuration en forme de C (11) .

3. Module airbag selon la revendication 1 ou 2, **caractérisé en ce que** le coussin gonflable (10) est roulé et/ou plié en zigzag dans le sens de son extension longitudinale (L) à l'intérieur de sa configuration en forme de C (11), et/ou **en ce que** le coussin gonflable (10) est roulé et/ou plié en zigzag dans le sens de son extension longitudinale (L) dans la zone de sa section supplémentaire (18).

4. Module airbag selon l'une des revendications précédentes 1 à 3, **caractérisé en ce que** le coussin gonflable (10) présente le long de son extension longitudinale (L) une pluralité de pattes de fixation (22) destinées à recevoir des dispositifs de fixation (30) pour le montage du module airbag (1) sur un véhicule, pour lequel les pattes de fixation (22) s'étendent depuis la première branche (12) ou depuis la section de liaison (16) ou depuis la section supplémentaire (18).

5. Module airbag selon l'une quelconque des revendications 1 à 4 précédentes, **caractérisé en ce que** le coussin gonflable (10) est disposé dans le module airbag (1), de telle sorte que, dans un plan de coupe transversal imaginaire (EQ), un côté ouvert (13) de la configuration en forme de C (11), en particulier dans une situation de montage du coussin gonflable (10), peut être positionné ou est positionné, de telle sorte que le côté ouvert (13) de la configuration en forme de C (11) soit dirigé vers un côté de la carrosserie (15) du module airbag (1) ou vers un côté (23) du module airbag (1) opposé au côté de la carrosserie (15) et/ou vers le haut ou vers le bas, en particulier en diagonale vers le haut ou en diagonale vers le bas.

6. Module airbag selon l'une des revendications 1 à 5 précédentes, **caractérisé en ce que** le coussin gonflable (10) présente le long de son extension longitudinale (L) une pluralité de sections longitudinales (LA1, LA2, LA3) et est disposé dans le module airbag (1), de telle sorte qu'un premier côté ouvert (13-1) d'une première configuration en forme de C (11-1), en particulier dans une situation de montage du coussin gonflable, peut être positionné ou est positionné, de telle sorte qu'il est orienté dans une autre direction, qu'un autre côté ouvert (13-2) d'une autre configuration en forme de C (11-2) du coussin gonflable.

7. Module airbag selon l'une des revendications 1 à 6 précédentes, **caractérisé en ce que** le coussin gonflable (10) présente, le long de son extension longitudinale (L), une pluralité d'éléments de retenue (19), en particulier en forme de bande, espacés les uns des autres, entourant en forme d'anneau le coussin gonflable (10), qui sont conçus pour maintenir le coussin gonflable (10) dans sa configuration prévue pour le montage sur le véhicule automobile.

8. Procédé de fabrication d'un module airbag (1) selon l'une des revendications 1 à 7, pour lequel un coussin gonflable est roulé et/ou plié en un paquet allongé transversalement à son étendue longitudinale (LR), et pour lequel des bords latéraux du paquet sont ensuite rapprochés au moins par sections et de préférence fixés, de sorte que le coussin gonflable(10) présente, dans un plan de section imaginaire (EQ) transversal à son étendue longitudinale (L), une configuration en forme de C (11) avec deux branches (12, 14), pour lequel le coussin gonflable (10) présentant le long de son étendue longitudinale (L) une pluralité de plans de section transversale (EQ1, EQ2) parallèles les uns aux autres, et pour lequel un premier plan médian (EM1) défini par les branches (12-1, 14-1) situées les unes à côté des autres dans un premier plan de section transversale (EQ1) coupe un deuxième plan médian (EM2) défini par les branches (12-2, 14-2) situées les unes à côté des autres dans un deuxième plan de section transversale (EQ2).
